# EUROPEAN PATENT APPLICATION

(11) **EP 2 071 751 A1**
(43) Date of publication of application: **17.06.2009**
(21) Application number: 08163369.5
(22) Date of filing: 01.09.2008
(51) Int. Cl.: H04J 11/00, H04J 13/00

(54) **Methods and arrangements for channelization code selection**

(30) Priority: 14.12.2007 US 13840 P
(71) Applicant: Telefonaktiebolaget LM Ericsson (publ), 164 83 Stockholm (SE)
(72) Inventor: Andersson, Lennart, SE-269 92, BÅSTAD (SE)
(74) Representative: Andersson, Björn E.

(57) **Abstract**

A method of channelization code selection for up-link transmission of a wireless communication system is disclosed. The method comprises determining (221), based on a first power limitation indication value associated with a first terminal of the wireless communication system, if the first terminal is power limited; dynamically selecting (222) at least one first channelization code associated with a first signal variation value for allocation to the first terminal so that, if the first terminal is power limited, the first signal variation value indicates a first minimal signal variation; and signalling (230) an indication of the at least one first channelization code to the first terminal. Corresponding arrangements are also disclosed.

## Description

### Technical Field

The present invention relates generally to the field of selecting channelization codes. More particularly, it relates to selecting channelization codes for use in up-link transmission.

### Background

In WCDMA (Wideband Code Division Multiple Access) systems currently used, each terminal is assigned its own unique scrambling code for up-link (UL) transmission, which implies that each terminal has access to its own channelization code tree. This provides for the possibility to determine a priori which channelization codes to use for different physical channel constellations, which has resulted in standardized fixed channelization code selections (see for example 3GPP TSG RAN, "UE spreading and modulation (FDD)", Technical specification 25.213, v. 7.3.0, Sept. 2007).

However, system, channel and/or terminal conditions may change over time. The standardized fixed channelization code selections made a priori may not be optimal at all such system conditions.

Furthermore, channelization code tree sharing between terminals may be considered for future systems (see for example the study item 3GPP TSG RAN, "Synchronized E-DCH for UTRA FDD", RP-070678). In some future system it may be considered to use the same channelization code tree (and the same scrambling code) for several or all terminals in a cell. Such an approach would have the advantage that all terminals are orthogonal, which would reduce the interference between users in the same cell and therefore improve the system performance.

A problem with this approach, however, is that standardized fixed channelization code selections made a priori cannot be applied directly because the approach requires that the different terminals use different parts of the channelization code tree to avoid code collision.

Therefore, there is a need for improved methods and arrangements for channelization code selection.

### Summary

It should be emphasized that the term "comprises/comprising" when used in this specification is taken to specify the presence of stated features, integers, steps, or components, but does not preclude the presence or addition of one or more other features, integers, steps, components, or groups thereof.

It is an object of the invention to obviate at least some of the above disadvantages and to provide improved methods and arrangements for channelization code selection.

According to a first aspect of the invention this is achieved by a method of channelization code selection for up-link transmission of a wireless communication system. The method comprises determining, based on a first power limitation indication value associated with a first terminal of the wireless communication system, if the first terminal is power limited, dynamically selecting at least one first channelization code associated with a first signal variation value for allocation to the first terminal so that, if the first terminal is power limited, the first signal variation value indicates a first minimal signal variation, and signalling an indication of the at least one first channelization code to the first terminal.

In some embodiments, the step of determining if the first terminal is power limited may comprise receiving a first flag from the first terminal, indicating that the first terminal is power limited if the first flag is set.

In some embodiments, the step of determining if the first terminal is power limited may comprise receiving a first mean power value from the first terminal, and comparing the first mean power value to a first threshold, wherein the first mean value being greater than the first threshold indicates that the first terminal is power limited.

A second aspect of the invention is a method of channelization code selection for up-link transmission of a wireless communication system. The method comprises determining, based on a second power limitation indication value associated with a second terminal of the wireless communication system, if the second terminal is at risk of becoming power limited, dynamically selecting at least one second channelization code associated with a second signal variation value for allocation to the second terminal so that, if the second terminal is at risk of becoming power limited, the second signal variation value indicates a second minimal signal variation, and signalling an indication of the at least one second channelization code to the second terminal.

In some embodiments, the step of determining if the second terminal is at risk of becoming power limited may comprise receiving a second flag from the second terminal, indicating that the second terminal is at risk of becoming power limited if the second flag is set.

In some embodiments, the step of determining if the second terminal is at risk of becoming power limited may comprise receiving a second mean power value from the second terminal, and comparing the second mean power value to a second threshold, wherein the second mean value being greater than the second threshold indicates that the second terminal is at risk of becoming power limited.

In some embodiments, the step of determining if the second terminal is at risk of becoming power limited may comprise evaluating an amount of resources allocated to the second terminal, wherein the amount of resources being larger than a reference amount indicates that the second terminal is at risk of becoming power limited.

In some embodiments, the method according to the first aspect of the invention may further comprise the method according to the second aspect of the invention. The first terminal may be identical with the second terminal. Alternatively, the first terminal may not be identical with the second terminal, in which case the first minimal signal variation may be smaller than the second minimal signal variation.

A third aspect of the invention is an arrangement for channelization code selection for up-link transmission of a wireless communication system. The arrangement comprises determination circuitry adapted to determine, based on a first power limitation indication value associated with a first terminal of the wireless communication system, if the first terminal is power limited. The arrangement also comprises a scheduler adapted to dynamically select at least one first channelization code associated with a first signal variation value for allocation to the first terminal so that, if the first terminal is power limited, the first signal variation value indicates a first minimal signal variation. The arrangement further comprises a transmitter adapted to signal an indication of the at least one first channelization code to the first terminal.

A fourth aspect of the invention is an arrangement for channelization code selection for up-link transmission of a wireless communication system. The arrangement comprises determination circuitry adapted to determine, based on a second power limitation indication value associated with a second terminal of the wireless communication system, if the second terminal is at risk of becoming power limited. The arrangement also comprises a scheduler adapted to dynamically select at least one second channelization code associated with a second signal variation value for allocation to the second terminal so that, if the second terminal is at risk of becoming power limited, the second signal variation value indicates a second minimal signal variation. The arrangement further comprises a transmitter adapted to signal an indication of the at least one second channelization code to the second terminal.

In some embodiments, the arrangement according to the third or fourth aspect of the invention may further comprise a receiver adapted to receive the first or second power limitation indication values from the first or second terminal, respectively.

A fifth aspect of the invention is a base station comprising the arrangement according to any of the third or fourth aspects of the invention.

A sixth aspect of the invention is a method of channelization code selection for up-link transmission of a wireless communication terminal. The method comprises determining, based on a first power limitation indication value associated with the terminal, if the terminal is power limited, and receiving an indication of at least two feasible channelization codes, each associated with a respective signal variation value. The method further comprises dynamically selecting at least one of the at least two feasible channelization codes so that, if the terminal is power limited, the signal variation value associated with the selected at least one channelization code indicates a minimal signal variation among the respective signal variation values associated with the at least two feasible channelization codes, and using the selected at least one channelization code for the up-link transmission.

A seventh aspect of the invention is a method of channelization code selection for up-link transmission of a wireless communication terminal. The method comprises determining, based on a second power limitation indication value associated with the terminal, if the terminal is at risk of becoming power limited, and receiving an indication of at least two feasible channelization codes, each associated with a respective signal variation value. The method further comprises dynamically selecting at least one of the at least two feasible channelization codes so that, if the terminal is at risk of becoming power limited, the signal variation value associated with the selected at least one channelization code indicates a minimal signal variation among the respective signal variation values associated with the at least two feasible channelization codes, and using the selected at least one channelization code for the up-link transmission.

An eighth aspect of the invention is an arrangement for channelization code selection for up-link transmission of a wireless communication terminal. The arrangement comprises determination circuitry adapted to determine, based on a first power limitation indication value associated with the terminal, if the terminal is power limited, and a receiver adapted to receive an indication of at least two feasible channelization codes, each associated with a respective signal variation value. The arrangement further comprises selection circuitry adapted to dynamically select at least one of the at least two feasible channelization codes so that, if the terminal is power limited, the signal variation value associated with the selected at least one channelization code indicates a minimal signal variation among the respective signal variation values associated with the at least two feasible channelization codes, and a transmitter adapted to use the selected at least one channelization code for the up-link transmission.

A ninth aspect of the invention is an arrangement for channelization code selection for up-link transmission of a wireless communication terminal. The arrangement comprises determination circuitry adapted to determine, based on a second power limitation indication value associated with the terminal, if the terminal is at risk of becoming power limited, and a receiver adapted to receive an indication of at least two feasible channelization codes, each associated with a respective signal variation value. The arrangement further comprises selection circuitry adapted to dynamically select at least one of the at least two feasible channelization codes so that, if the terminal is at risk of becoming power limited, the signal variation value associated with the selected at least one channelization code indicates a minimal signal variation among the respective signal variation values associated with the at least two feasible channelization codes, and a transmitter adapted to use the selected at least one channelization code for the up-link transmission.

A tenth aspect of the invention is a mobile terminal comprising the arrangement according to the eighth aspect of the invention and/or the arrangement according to the ninth aspect of the invention.

In some embodiments of the first through tenth aspects, each of the signal variation values may comprise a Peak-to-Average Power Ratio - PAPR - or a Cubic Metric - CM.

An advantage of some embodiments of the invention is that an approach for dynamic selection of channelization codes is provided.

Another advantage of some embodiments of the invention is that an approach for dynamic allocation of channelization codes is provided.

Another advantage of some embodiments of the invention is that an approach for dynamic selection of channelization codes that is suitable when terminals use the same code tree is provided.

Another advantage of some embodiments of the invention is that channelization codes may be selected so that the risk of terminals becoming power limited is reduced.

Another advantage of some embodiments of the invention is that efficient utilization of the transmit power resources available in the terminals may be achieved.

Another advantage of some embodiments of the invention is that the throughput may be optimized.

### Brief Description of the Drawings

Further objects, features and advantages of the invention will appear from the following detailed description of embodiments of the invention, with reference being made to the accompanying drawings, in which:
Fig. 1 is a plot illustrating example Peak-to-Average Power Ratio (PAPR) values according to some embodiments of the invention;
Fig. 2 is a flowchart illustrating example method steps according to some embodiments of the invention;
Fig. 3 is a block diagram illustrating an example arrangement according to some embodiments of the invention;
Fig. 4 is a flowchart illustrating example method steps according to some embodiments of the invention;
Fig. 5 is a block diagram illustrating an example arrangement according to some embodiments of the invention; and
Fig. 6 is a schematic drawing illustrating a mobile terminal connected, through a radio link, to a base station site, wherein the mobile terminal and/or the base station may comprise arrangements according to some embodiments of the invention.

### Detailed Description

In the following, embodiments of the invention will be described where channelization codes are selected and/or allocated dynamically. Embodiments of the invention may be suitable when terminals use the same channelization code tree, but also in other situations.

One important optimization criterion for assigning channelization codes is maximized system throughput. Such maximization may be achieved by optimizing the maximum power with which each of the terminals can transmit without significant distortion.

As stated above, system, channel and/or terminal conditions may change over time. The standardized fixed channelization code selections made a priori may not be optimal at all such system conditions. For example, if the respective available transmit powers of terminals of the system change over time, an a priori allocation that maximizes throughput based on available transmit powers of terminals may not be optimal at all times. Thus, dynamic allocation might be preferable.

The term dynamic may be interpreted as something that is not predefined by a system (e.g. in a standard specification, in connection with manufacturing, or at set up). Dynamic allocation may be that allocation of channelization codes is determined based on some parameters when a terminal connects to a network. Alternatively or additionally, dynamic allocation may be that allocation of channelization codes is determined based on some parameters when a terminal experiences cell handover. Alternatively or additionally, dynamic allocation may be that allocation of channelization codes is determined based on some parameters at time intervals, which may be regular or not and which may be predetermined or depending on input from the system and/or the terminal. As will be explained in the following, the parameters referred to may be one or more of (but are not limited to) power limitation indication values, signal variation values, the feasible channelization codes, mean power values, amounts of allocated resources,

Some embodiments of the invention may use the available transmit power for each terminal as a parameter in the channelization code selection. Such an approach may provide for efficient utilization of the transmit power resources available in the terminal, which may be important for optimizing the system throughput. The available transmit power may depend on the channel configuration (e.g. channelization codes, power offsets, etc.) and may be calculated from a mean power value associated with transmissions of the terminal and corresponding channel configuration (for which the mean power value was measured).

The situation when distortion (e.g. clipping and/or violation of conditions related to Error Vector Magnitude (EVM) and/or Adjacent Channel Leakage ratio (ACLR)) arises will be referred to as a terminal being power limited. Thus, some embodiments determine if a terminal is power limited. Some embodiments determine if a terminal is at risk of becoming power limited. Some embodiments determine both if a terminal is power limited and if a terminal is at risk of becoming power limited.

These determinations may be made in the terminal itself and either signaled to a base station to be used for channelization code selection and allocation in the base station, or used for channelization code selection (from a number of feasible channelization codes signaled by the base station) in the terminal. Alternatively or additionally, the determination may be made in the base station and used for channelization code selection and allocation in the base station.

Optimizing the maximum power with which a terminal can transmit without significant distortion is closely related to minimizing the Peak-to-Average Power Ratio (PAPR) or the Cubic Metric (CM). PAPR and CM are measures that are related to the signal variation. Some embodiments of the invention therefore use PAPR and/or CM as a parameter in the channelization code selection. For example, channelization codes associated with a low PAPR or CM may be selected for terminals that are or are at risk of becoming power limited. The terminal transmit power may be efficiently used if the channelization codes are thus selected. The calculation of PAPR and CM is well known in the art and may depend on the scrambling code, on the transmitted bits, on the number of physical channels used and their respective power offsets, spreading factors, modulations, branches and channelization codes. In the following description PAPR will be referred to, but it is understood that CM is equally applicable.

Embodiments of the invention may be particularly suitable for selecting channelization codes for E-DPDCH. In such embodiments, the available power for each terminal may be read by the base station from the E-DPDCH in-band signaling of available transmission power relative to the DPCCH (Dedicated Physical Control CHannel). According to some embodiments, terminals with more data to transmit and having little or no available transmission power may be assigned E-DPDCH channelization codes associated with a low PAPR.

The E-DPDCH channelization codes may, for example, be sorted in accordance with their PAPR properties and stored in a table a priori to simplify the dynamic selection of channelization codes.

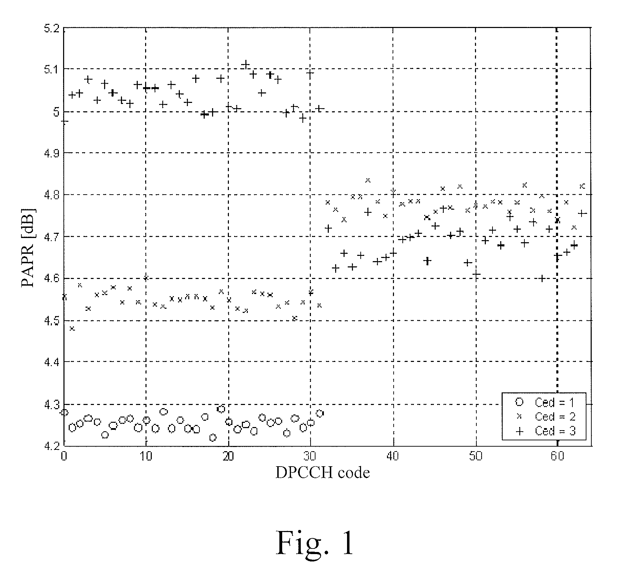

Figure 1 illustrates an example of how PAPR values may depend on the selected DPCCH and E-DPDCH channelization codes (E-DPDCH channelization codes are denoted Ced in Figure 1). Assuming that there are three active terminals using DPCCH codes 0, 1 and 2 (with spreading factor 256), the example in Figure 1 illustrates that an E-DPDCH pair with channelization code 1 (and spreading factor 4) has a PAPR that is 0.3 dB lower than for an E-DPDCH with channelization code 2 (and spreading factor 4) and a PAPR that is 0.8 dB lower than for an E-DPDCH with channelization code 3 (and spreading factor 4). Embodiments of the invention might therefore use channelization code 1 for the terminal with the smallest available transmission power.

In some embodiments, a pair of E-DPDCH channelization codes might be selected instead of a single E-DPDCH channelization code for a terminal that is or is at risk of becoming power limited, since two E-DPDCH channelization codes have lower CM than one E-DPDCH channelization code.

In some embodiments, the PAPR for the different terminals are captured for all possible channelization codes and used to optimize the E-DPDCH channelization code selection. The PAPR values may, for example, be obtained through simulations of the assumed configuration (e.g. assumed channelization codes and power offsets). Another possibility is to use the received signal to measure the current PAPR values the different terminals.

If, for example, the PAPR value for terminal *k*, which uses E-DPDCH channelization code c at moment *i* is denoted *P_{k,ci}*, then the estimated available power at moment *i*+1, Δ̂_{*k*,*i*+1}, may be maximized over the possible *c*_{*i*+1} such that *P*_{*k,c*_{*i*+1}} + Δ̂_{*k,i*+1} ≤ *P_{k,cᵢ}* + Δ*_{k,i}*, where Δ*ₖ*,*ᵢ* is the currently (at moment *i*) available power for terminal *k* with the currently used channelization code(s)). This would reduce the risk of any terminal becoming power limited. This would also provide a possibility to keep the back off value (a measure of how much marginal is needed between the mean transmit power and a maximum transmit power to avoid distortion) small for all terminals.

Other optimization criteria can additionally or alternatively be used. Such optimization criteria may, for example, take into account priorities between the terminals.

In some embodiments, predictions of the transmit power needed by the terminal in future Transmission Time Intervals (TTIs) may be taken into account. Such prediction information may be produced by a scheduler in a base station based on, for example, the scheduled grants, the transport formats used by a terminal, and/or the "happy bit" (which indicates if a terminal requests more resources).

If, for example, the PAPR value for terminal *k*, which uses E-DPDCH channelization code *c* at moment *i* is denoted *P_{k,cᵢ}* and the predicted PAPR at moment *i*+1 is *P*_{*k,c*_{*i*+1}}, then an objective of the channelization code scheduler may be to ensure that *P*_{*k,c*_{*i*+1}} ≤ Δ*_{k,i}* + *P_{k,cᵢ}* for all terminals, if possible. For example, the estimated available power at moment *i*+1, Δ̂_{*k,i*+1}, may be maximized over the possible *c*_{*i*+1} such that *Pₖ,*_{*c*_{*i*+1}} + Δ̂_{*k,i*+1} ≤ *P_{k,cᵢ}* + Δ_{*k*,*i*}.

In some embodiments, the DPCCH channelization code (and possibly other control channel channelization codes, such as for HS-DPCCH and E-DPCCH) may be assigned to terminals based on the available transmit power using the same principles as explained above. This can be done either semi-statically when the control channels are set up or dynamically during transmissions. Terminals that are at risk of becoming power limited (such as e.g. terminals using high data rates) may be assigned a DPCCH channelization code that provides a low PAPR. Returning to the example in Figure 1, DPCCH channelization codes between 0 and 31 might be assigned to terminals that are at risk of becoming power limited.

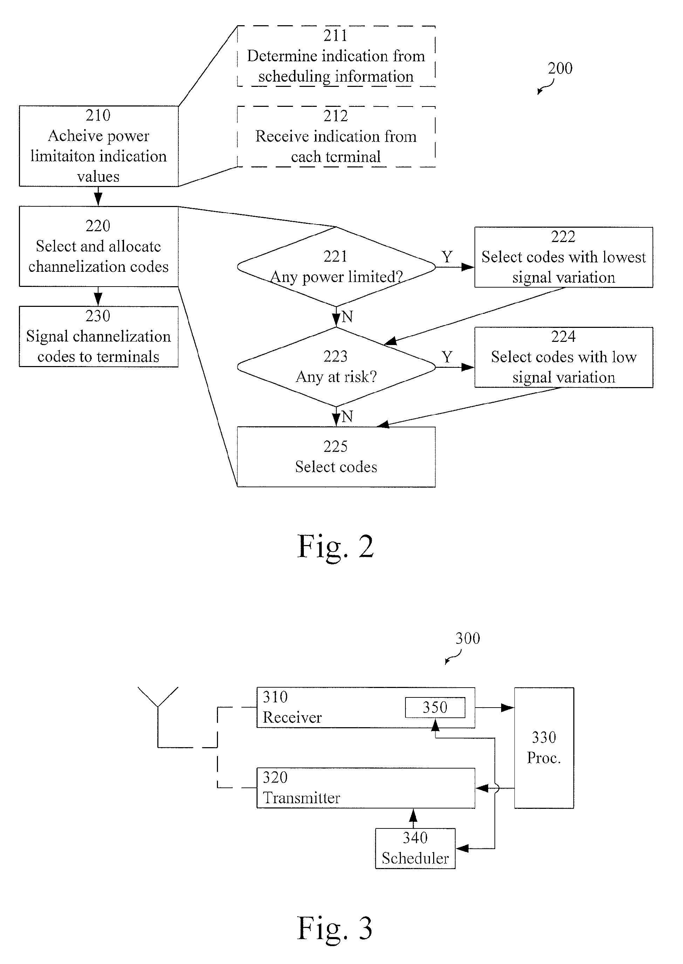

Figure 2 illustrates an example method 200 according to some embodiments of the invention. The example method 200 may, for example, be used in a base station and/or a base station controller of a wireless communication system.

The method begins in step 210, where one or more power limitation indication values are achieved for each of the terminals associated with the base station. The power limitation values may be one or more of a flag indicating that a terminal is power limited, a flag indicating that a terminal is at risk of becoming power limited, a mean power of a terminal, an available power of a terminal and an amount of resources allocated to a terminal. The amount of resources allocated may be determined in the base station or base station controller (sub-step 211), while the other power limitation values may be received via signaling from each terminal to the base station (sub-step 212).

In step 220, the one or more power limitation indication values achieved for each of the terminals are used to select channelization codes for allocation to each of the terminals.

As illustrated by sub-step 221, the selection may comprise determining whether any of the terminals are power limited. The determination may be made by determining whether the flag indicating that a terminal is power limited is set or not. The determination may also be made by comparing the mean or available power to a pre-determined threshold.

If there are one or more terminals that are power limited (YES-path out of step 221) then the method continues to step 222, where the channelization codes resulting in the lowest signal variation (e.g. PAPR) are selected for allocation to those terminals.

In sub-step 223, the selection may continue by determining whether any of the terminals are at risk of becoming power limited. The determination may be made by determining whether the flag indicating that a terminal is at risk of becoming power limited is set or not. The determination may also be made by comparing the mean or available power to a pre-determined threshold (which may be different from the one used in sub-step 221). The determination may also be made by comparing the mean or available power between the different terminals. The determination may also be made by evaluating the amount of resources allocated to each terminal (if a terminal is allocated a lot of resources, there is a larger risk of power limitation).

If there are one or more terminals that are at risk of becoming power limited (YES-path out of step 223) then the method continues to step 224, where the channelization codes resulting in the lowest signal variation (e.g. PAPR) among the remaining channelization codes are selected for allocation to those terminals.

In step 225, the remaining terminals (that neither are or risk becoming power limited) are allocated channelization codes from the now remaining channelization codes.

In step 230, the respective selected channelization codes are communicated to each of the terminals e.g. by signaling over a control channel. The selected channelization codes may be comprised in transport formats for communication to each of the terminals.

The selection and allocation of channelization codes in steps 222, 224 and 225 may comprise allocating one or more channelization codes or a sub-tree of channelization codes. The selection and allocation may comprise determining channelization codes that must be used by the terminal or it may comprise determining a plurality of feasible channelization codes or sub-trees. In the latter case the terminal is supplied with these feasible channelization codes or sub-trees and makes the final selection (possibly, but not necessarily based on its own power limitation indication values).

It should be noted that embodiments of the invention might involve determining whether or not a terminal is power limited, and/or whether or not a terminal is at risk of becoming power limited. Some embodiments compare a received mean power value with two threshold levels to make both of the above determinations.

Figure 3 illustrates an example arrangement 300 according to embodiments of the invention. The example arrangement 300 may, for example, be adapted to perform method steps as described in connection to Figure 2. The arrangement 300 may be comprised in a base station (possibly with some parts comprised in a base station controller).

The arrangement 300 comprises a receiver chain 310, a transmitter chain 320, and further processing circuitry 330. The receiver may be adapted to receive flags and/or power values signaled from terminals as described above.

The arrangement also comprises determination circuitry 350 for determining whether a terminal is power limited and/or whether a terminal is at risk of becoming power limited. The determination circuitry 350 may be integral to the receiver chain 310 as shown in Figure 3, but it may also be situated elsewhere in the arrangement 300. The determination circuitry may use flags and/or power values signaled from terminals and/or information regarding predicted power consumption (e.g. from a scheduler 340) as explained above.

The scheduler 340 uses the result from the determination circuitry 350 to select channelization codes for each of the terminals as described above, and the transmitter chain 320 is adapted to signal the respective selected channelization codes to each of the terminals.

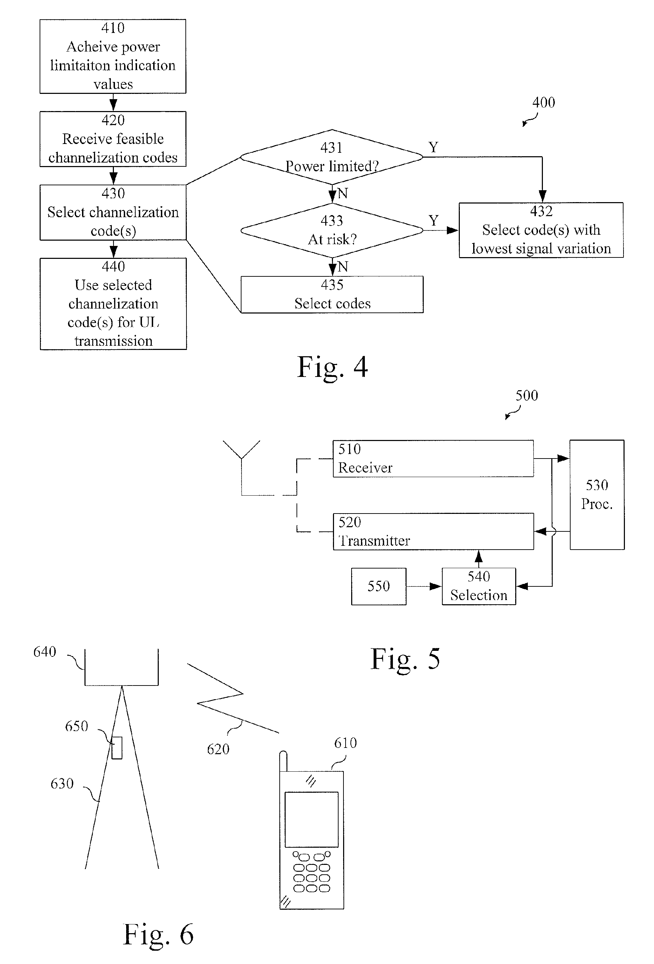

Figure 4 illustrates an example method 400 according to some embodiments of the invention. The example method 400 may, for example, be used in a terminal residing in a wireless communication system. The method 400 illustrates a situation when a plurality of feasible channelization codes, sub-trees, or code combinations are signaled to a terminal from a system, and the terminal makes the final channelization code selection based on its own one or more power limitation indication values.

The method begins in step 410, where the one or more power limitation indication values are achieved for the terminal. The power limitation values may be one or more of a flag indicating that a terminal is power limited, a flag indicating that a terminal is at risk of becoming power limited, a mean power of a terminal and an available power of a terminal.

In step 420, the plurality of feasible channelization codes is received from the system. The feasible channelization codes may be comprised in transport formats. The feasible channelization codes may comprise two or more channelization codes or a sub-tree of channelization codes.

In step 430, the one or more power limitation indication values for the terminal are used to select channelization code(s).

As illustrated by sub-step 431, the selection may comprise determining, whether the terminal is power limited. The determination may be made by determining whether the flag indicating that the terminal is power limited is set or not. The determination may also be made by comparing the mean or available power to a pre-determined threshold.

If the terminal is power limited (YES-path out of step 431) then the method continues to step 432, where the channelization code or codes resulting in the lowest signal variation (e.g. PAPR) are selected.

If the terminal is not power limited (NO-path out of step 431), the method continues to sub-step 433, where it is determined whether the terminal is at risk of becoming power limited. The determination may be made by determining whether the flag indicating that the terminal is at risk of becoming power limited is set or not. The determination may also be made by comparing the mean or available power to a pre-determined threshold (which may be different from the one used in sub-step 431).

If the terminal is at risk of becoming power limited (YES-path out of step 433) then the method continues to step 432, where the channelization code or codes resulting in the lowest signal variation (e.g. PAPR) are selected.

If the terminal is not at risk of becoming power limited (NO-path out of step 433) then the method continues to step 435, where channelization code selection is performed based on conventional methods.

In step 440, the selected channelization code(s) are used for up-link transmission.

Figure 5 illustrates an example arrangement 500 according to embodiments of the invention. The example arrangement 500 may, for example, be adapted to perform method steps as described in connection to Figure 4. The arrangement 500 may be comprised in a mobile terminal.

The arrangement 500 comprises a receiver chain 510, a transmitter chain 520, and further processing circuitry 530. The receiver may be adapted to receive a plurality of feasible channelization codes from a base station as described above.

The arrangement also comprises determination circuitry 550 for determining whether the terminal is power limited and/or whether the terminal is at risk of becoming power limited. As explained above, the determination circuitry may use flags and/or power values for the determination.

The arrangement also comprises selection circuitry 540, which uses the result form the determination circuitry 550 to select channelization codes for the terminal as described above. The transmitter chain 520 is adapted to use the selected channelization codes for up-link transmission.

Figure 6 illustrates an example mobile terminal 610 connected, through a radio link 620, to a base station site 630. The base station site comprises one or more antennas 640 and at least one base station 650. The mobile terminal may comprise arrangements according to embodiments of the invention. The mobile terminal 610 may, for example, comprise an arrangement as described in connection to Figure 5.

The mobile terminal 610 is illustrated as a mobile telephone in a schematic front view. The mobile terminal may comprise a display, a keypad, a loudspeaker, and a microphone, which together provides a man-machine interface for operating the mobile terminal. The mobile terminal may further comprise one or more antennas.

The example mobile terminal 610 is adapted to connect to a mobile telecommunication network via the wireless link 620 to the radio base station 650. Hence, a user of the mobile terminal may use conventional circuit-switched telecommunication services such as voice calls, data calls, video calls, and fax transmissions, and/or packet-based services such as electronic messaging, VoIP, Internet browsing, electronic commerce, etc. To this end, the mobile terminal 610 and the base station 650 may be compliant with at least one mobile telecommunication standard, for instance Universal Mobile Telecommunication Standard (UMTS) or UMTS Long Term Evolution (UMTS LTE).

The described embodiments of the invention and their equivalents may be realised in software or hardware or a combination thereof. They may be performed by general-purpose circuits associated with or integral to a communication device, such as digital signal processors (DSP), central processing units (CPU), co-processor units, field-programmable gate arrays (FPGA) or other programmable hardware, or by specialized circuits such as for example application-specific integrated circuits (ASIC). All such forms are contemplated to be within the scope of the invention.

The invention may be embodied within an electronic apparatus comprising circuitry/logic or performing methods according to any of the embodiments of the invention. The electronic apparatus may, for example, be a portable or handheld mobile radio communication equipment, a mobile radio terminal, a mobile telephone, a base station, a base station controller, a communicator, an electronic organizer, a smartphone, a computer, a notebook, a plug-in card, an embedded drive, a mobile gaming device, or a (wrist) watch.

According to some embodiments of the invention, a computer program product comprises a computer readable medium such as, for example, a diskette or a CD-ROM. The computer readable medium may have stored thereon a computer program comprising program instructions. The computer program may be loadable into a data-processing unit, which may, for example, be comprised in a mobile terminal. When loaded into the data-processing unit, the computer program may be stored in a memory associated with or integral to the data-processing unit. According to some embodiments, the computer program may, when loaded into and run by the data-processing unit, cause the data-processing unit to execute method steps according to, for example, the methods shown in any of the Figures 2 and 4.

The invention has been described herein with reference to various embodiments. However, a person skilled in the art would recognize numerous variations to the described embodiments that would still fall within the scope of the invention. For example, the method embodiments described herein describes example methods through method steps being performed in a certain order. However, it is recognized that these sequences of events may take place in another order without departing from the scope of the invention. Furthermore, some method steps may be performed in parallel even though they have been described as being performed in sequence.

In the same manner, it should be noted that in the description of embodiments of the invention, the partition of functional blocks into particular units is by no means limiting to the invention. Contrarily, these partitions are merely examples. Functional blocks described herein as one unit may be split into two or more units. In the same manner, functional blocks that are described herein as being implemented as two or more units may be implemented as a single unit without departing from the scope of the invention.

Hence, it should be understood that the limitations of the described embodiments are merely for illustrative purpose and by no means limiting. Instead, the scope of the invention is defined by the appended claims rather than by the description, and all variations that fall within the range of the claims are intended to be embraced therein.

## Claims

1. A method of channelization code selection for up-link transmission of a wireless communication system comprising:
determining (221), based on a first power limitation indication value associated with a first terminal of the wireless communication system, if the first terminal is power limited;
dynamically selecting (222) at least one first channelization code associated with a first signal variation value for allocation to the first terminal so that, if the first terminal is power limited, the first signal variation value indicates a first minimal signal variation; and
signalling (230) an indication of the at least one first channelization code to the first terminal.

2. The method of claim 1, wherein the step of determining if the first terminal is power limited comprises receiving (212) a first flag from the first terminal, indicating that the first terminal is power limited if the first flag is set.

3. The method of claim 1, wherein the step of determining if the first terminal is power limited comprises:
receiving (212) a first mean power value from the first terminal; and
comparing the first mean power value to a first threshold, wherein the first mean value being greater than the first threshold indicates that the first terminal is power limited.

4. The method of any of claims 1 through 3, wherein the first signal variation value comprises a Peak-to-Average Power Ratio - PAPR - or a Cubic Metric - CM.

5. A method of channelization code selection for up-link transmission of a wireless communication system comprising:
determining (223), based on a second power limitation indication value associated with a second terminal of the wireless communication system, if the second terminal is at risk of becoming power limited;
dynamically selecting (224) at least one second channelization code associated with a second signal variation value for allocation to the second terminal so that, if the second terminal is at risk of becoming power limited, the second signal variation value indicates a second minimal signal variation; and
signalling (230) an indication of the at least one second channelization code to the second terminal.

6. The method of claim 5, wherein the step of determining if the second terminal is at risk of becoming power limited comprises receiving (212) a second flag from the second terminal, indicating that the second terminal is at risk of becoming power limited if the second flag is set.

7. The method of claim 5, wherein the step of determining if the second terminal is at risk of becoming power limited comprises:
receiving (212) a second mean power value from the second terminal; and
comparing the second mean power value to a second threshold, wherein the second mean value being greater than the second threshold indicates that the second terminal is at risk of becoming power limited.

8. The method of claim 5, wherein the step of determining if the second terminal is at risk of becoming power limited comprises:
evaluating (211) an amount of resources allocated to the second terminal, wherein the amount of resources being larger than a reference amount indicates that the second terminal is at risk of becoming power limited.

9. The method of any of claims 5 through 8, wherein the second signal variation value comprises a Peak-to-Average Power Ratio - PAPR - or a Cubic Metric - CM.

10. The method of any of claims 1 through 4, further comprising the method of any of claims 5 through 9.

11. The method of claim 10, wherein the first terminal is identical with the second terminal.

12. The method of claim 10, wherein the first terminal is not identical with the second terminal and the first minimal signal variation is smaller than the second minimal signal variation.

13. An arrangement for channelization code selection for up-link transmission of a wireless communication system comprising:
determination circuitry (350) adapted to determine, based on a first power limitation indication value associated with a first terminal of the wireless communication system, if the first terminal is power limited;
a scheduler (340) adapted to dynamically select at least one first channelization code associated with a first signal variation value for allocation to the first terminal so that, if the first terminal is power limited, the first signal variation value indicates a first minimal signal variation; and
a transmitter (320) adapted to signal an indication of the at least one first channelization code to the first terminal.

14. An arrangement for channelization code selection for up-link transmission of a wireless communication system comprising:
determination circuitry (350) adapted to determine, based on a second power limitation indication value associated with a second terminal of the wireless communication system, if the second terminal is at risk of becoming power limited;
a scheduler (340) adapted to dynamically select at least one second channelization code associated with a second signal variation value for allocation to the second terminal so that, if the second terminal is at risk of becoming power limited, the second signal variation value indicates a second minimal signal variation; and
a transmitter (320) adapted to signal an indication of the at least one second channelization code to the second terminal.

15. The arrangement of claim 13 or 14, further comprising a receiver (310) adapted to receive the first or second power limitation indication values from the first or second terminal, respectively.

16. A base station (650) comprising the arrangement according to any of claims 13 through 15.

17. A method of channelization code selection for up-link transmission of a wireless communication terminal comprising:
determining (431), based on a first power limitation indication value associated with the terminal, if the terminal is power limited;
receiving (420) an indication of at least two feasible channelization codes, each associated with a respective signal variation value;
dynamically selecting (432) at least one of the at least two feasible channelization codes so that, if the terminal is power limited, the signal variation value associated with the selected at least one channelization code indicates a minimal signal variation among the respective signal variation values associated with the at least two feasible channelization codes; and
using (440) the selected at least one channelization code for the up-link transmission.

18. A method of channelization code selection for up-link transmission of a wireless communication terminal comprising:
determining (433), based on a second power limitation indication value associated with the terminal, if the terminal is at risk of becoming power limited;
receiving (420) an indication of at least two feasible channelization codes, each associated with a respective signal variation value;
dynamically selecting (432) at least one of the at least two feasible channelization codes so that, if the terminal is at risk of becoming power limited, the signal variation value associated with the selected at least one channelization code indicates a minimal signal variation among the respective signal variation values associated with the at least two feasible channelization codes; and
using (440) the selected at least one channelization code for the up-link transmission.

19. The method of any of claims 17 through 18, wherein each of the respective signal variation values comprise a Peak-to-Average Power Ratio - PAPR - or a Cubic Metric - CM.

20. An arrangement for channelization code selection for up-link transmission of a wireless communication terminal comprising:
determination circuitry (550) adapted to determine, based on a first power limitation indication value associated with the terminal, if the terminal is power limited;
a receiver (510) adapted to receive an indication of at least two feasible channelization codes, each associated with a respective signal variation value;
selection circuitry (540) adapted to dynamically select at least one of the at least two feasible channelization codes so that, if the terminal is power limited, the signal variation value associated with the selected at least one channelization code indicates a minimal signal variation among the respective signal variation values associated with the at least two feasible channelization codes; and
a transmitter (520) adapted to use the selected at least one channelization code for the up-link transmission.

21. An arrangement for channelization code selection for up-link transmission of a wireless communication terminal comprising:
determination circuitry (550) adapted to determine, based on a second power limitation indication value associated with the terminal, if the terminal is at risk of becoming power limited;
a receiver (510) adapted to receive an indication of at least two feasible channelization codes, each associated with a respective signal variation value;
selection circuitry (540) adapted to dynamically select at least one of the at least two feasible channelization codes so that, if the terminal is at risk of becoming power limited, the signal variation value associated with the selected at least one channelization code indicates a minimal signal variation among the respective signal variation values associated with the at least two feasible channelization codes; and
a transmitter (520) adapted to use the selected at least one channelization code for the up-link transmission.

22. A mobile terminal (610) comprising the arrangement according to claim 20 and/or the arrangement according to claim 21.
